Europäisches Patentamt

European Patent Office

Office européen des brevets

(11) Numéro de publication: **0 300 936**

**A1**

(12) **DEMANDE DE BREVET EUROPEEN**

(21) Numéro de dépôt: **88430019.5**

(22) Date de dépôt: **22.07.88**

(51) Int. Cl.⁴: **A 01 M 29/00**

(30) Priorité: **23.07.87 FR 8710522**

(43) Date de publication de la demande:
**25.01.89 Bulletin 89/04**

(84) Etats contractants désignés:
**AT BE CH DE ES GB GR IT LI LU NL SE**

(71) Demandeur: **Baudoin, Christian**
**Cascina Morgarolo Cai Rolli - Pavia**
**I-27027 Gropello (IT)**

**Girardi, Bruno**
**26 rue Scaliero**
**F-06300 Nice (FR)**

(72) Inventeur: **Baudoin, Christian**
**Cascina Morgarolo Cai Rolli - Pavia**
**I-27027 Gropello (IT)**

**Girardi, Bruno**
**26 rue Scaliero**
**F-06300 Nice (FR)**

(74) Mandataire **Hautier, Jean-Louis**
**Cabinet Hautier Office Méditerranéen de Brevets**
**d'Invention et de Marques 24 rue Masséna**
**F-06000 Nice (FR)**

(54) **Dispositif pour empêcher les oiseaux et notamment les pigeons de se poser sur une surface.**

(57) Il consiste en une bande (1) allongée en matière plastique semi-rigide (souple) portant à intervalles réguliers des étriers transversaux (2) dont les pointes (4) sont orientées vers le haut, la longueur de cet intervalle et les dimensions de ces étriers (2) étant dissuasifs vis à vis des dimensions des oiseaux à éloigner.

L'invention s'applique à la protection des bâtiments contre les oiseaux.

Fig. 3

EP 0 300 936 A1

## Description

### "Dispositif pour empêcher les oiseaux, et notamment les pigeons, de se poser sur une surface".

La présente invention concerne un nouveau type d'installation destinée à empêcher les oiseaux, et notamment les pigeons, de se poser sur les arêtes des murs, les toitures, corniches, balcons et autres éléments de bâtiments. Ce genre d'installation est couramment utilisée de nos jours pour éloigner les oiseaux, et, spécialement les pigeons, des monuments qu'ils salissent et dégradent.

L'état de la technique peut être défini par les brevets suivants :

- USA 2.308.893 : ce brevet décrit l'utilisation de pics ou picots verticaux rapportés sur un support pour empêcher l'accès des oiseaux sur des éléments de bâtiments.

- AU-B-43 178/79 : ce brevet décrit également l'utilisation de pics verticaux fixés sur un support ou directement fixés sur les éléments de bâtiments à protéger.

- FR-A-2.507.058 : le dispositif, objet de l'invention, comprend deux flasques 1 réunis par un axe ridige 2. Les extrémités des flasques sont réunies soit par des tiges rigides 3, soit par des fils ou câbles 3 fortement tendus par un ressort 4 ou par l'élasticité naturelle des flasques.

L'ensemble forme une sorte de cage d'écureuil très allongée qui se met en rotation sous le poids du pigeon qui tenterait de se poser dessus.

- FR-A-2.450.058 : il comprend un socle plat 1 pour recevoir le dispositif formé d'un élément quadrilatère complet 2 lequel peut être multiplié par autant d'éléments 3 aux extrémités du socle plat du système d'assemblage 4 pour assurer toutes les longueurs. Ce dispositif a un effet de réfraction à la lumière à travers un prisme 6 grâce à l'épaisseur du PVC transparent réalisé par injection. Les formes du dispositif sont variables 7 et l'ensemble peut être collé, agrafé, cloué, vissé à l'emplacement réservé 3. Les matériaux ou matières peuvent être de toute nature.

- FR-A-2.556.932 : dispositif destiné à dissuader les oiseaux, notamment les pigeons, de se poser sur les surfaces où ils sont indésirables.

Il est constitué de bandes supports 1 munies d'ergots 2 sur lesquels viennent s'encliqueter des éléments métalliques 3 munis d'un oeillet d'encliquetage 4 et de deux pointes verticales 5. Un second élément métallique 7 vient se fixer au premier au moyen de deux oeillets 8 et 9, sur chaque pointe 5 un renforcement localisé 6 et 10 permettant le maintien en place des éléments rajoutés à la suite.

Ce brevet décrit essentiellement un moyen de fixation des pics sur les bandes supports. Lesdits pics viennent s'encliqueter dans des oeillets d'encliquetage. La mise en volume du dispositif demande donc une grande main-d'oeuvre.

L'invention vise un moyen appartenant à la même catégorie mais ne présentant aucun des inconvénients ci-dessus cités.

Le dispositif selon l'invention est caractérisé en ce qu'il consiste en une bande allongée de matière plastique souple portant des pointes ou piques sous forme d'étriers transversaux venus de moulage avec la bande à des intervalles réguliers, la longueur de cet intervalle et les dimensions de ces étriers étant dissuasifs vis à vis des dimensions des oiseaux à éloigner. La bande portant ces piques peut être coupée et adaptée à toute longueur voulue et à toute configuration à protéger, grâce à la souplesse de la matière, qui prévient en même temps la rupture des piques qui se plient élastiquement sans se rompre. La matière utilisée étant insensible à l'oxydation et aux intempéries, ce système a une durée de vie pratiquement illimitée. La matière peut être colorée à la couleur du bâtiment à protéger, ce qui élimine l'aspect inesthétique du dispositif.

Les dessins ci-joints sont donnés à titre d'exemples indicatifs et non limitatifs. Ils représentent un mode de réalisation préféré selon l'invention. Ils permettront de comprendre aisément l'invention.

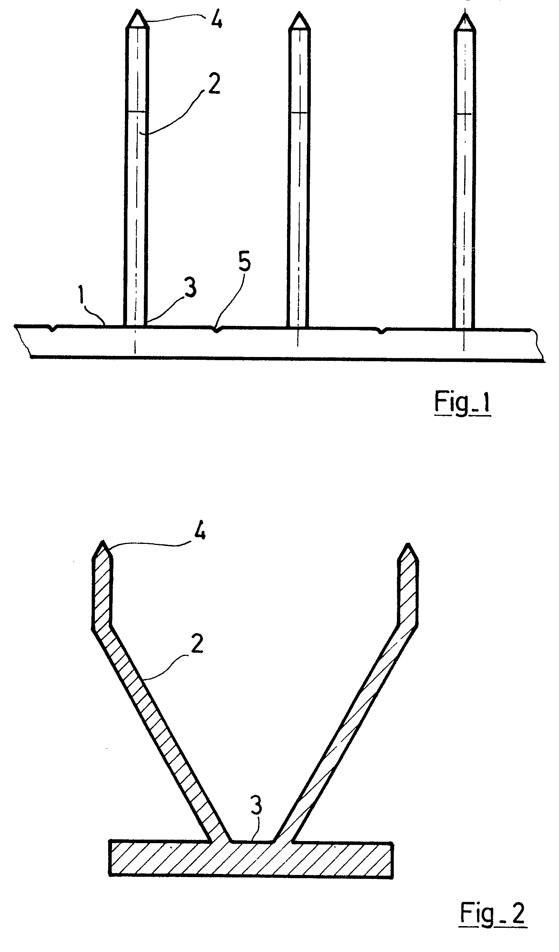

La figure 1 est une vue du dispositif vu de côté dans le sens longitudinal.

La figure 2 est une vue d'un étrier vu de face.

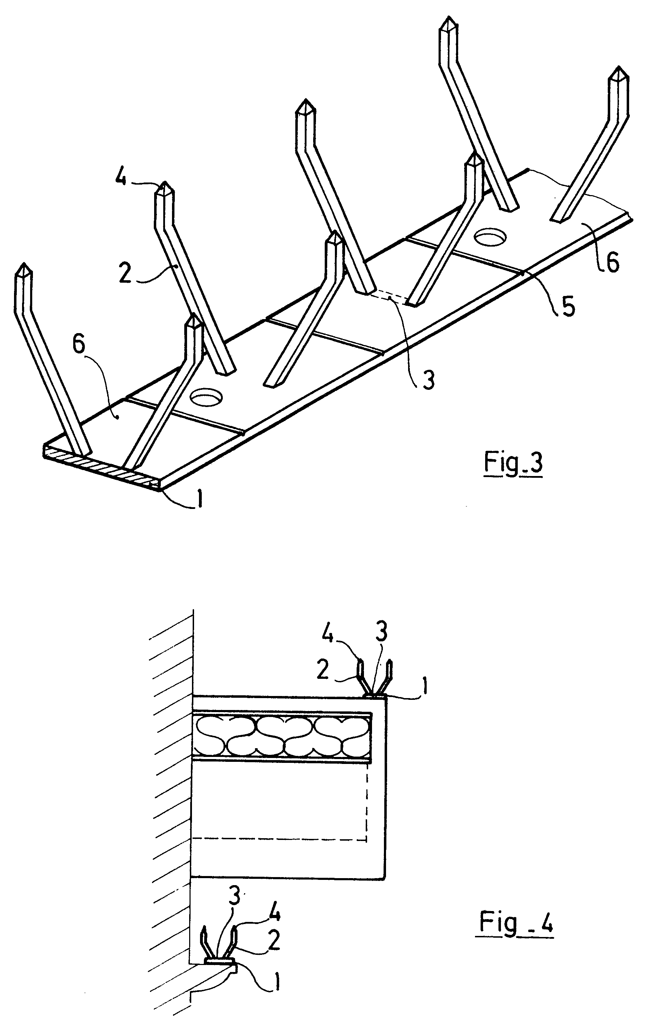

La figure 3 est une vue en perspective du dispositif.

La figure 4 est une vue en perspective du dispositif mis en place sur un élément de bâtiment à protéger.

Dans les figures, on voit que ce dispositif se compose, d'une part, d'une bande 1, en matière plastique semi-rigide (souple), telle que du NYLON, de préférence d'une qualité résistant à un intervalle de température de -30°C à +180°C (fusion), et d'étriers 2, dont la base 3 a approximativement la largeur de la bande 1, et les côtés se terminent par des pointes 4 dirigées vers le haut, ces étriers étant venus de moulage avec la bande 1, à intervalle régulier. A titre d'exemple, la bande 1 ayant une largeur d'environ 2cm, les étriers transversaux 2 sont répartis tous les 5cm le long de la bande 1, leur hauteur est d'environ 8cm et l'écart entre les deux pointes 4 d'un étrier est d'environ 8cm.

Ces dimensions sont telles que, lorsque ce dispositif est fixé sur une surface à protéger, les pigeons ne peuvent s'y maintenir. Toutefois les pointes 4 étant flexibles, elles ne peuvent en aucun cas être cassées par les pigeons et on peut considérer qu'une fois en place ce système peut demeurer efficace pendant des années.

L'ensemble bande 1- étriers 2 est moulé en longueurs indéfinies, et des amorces de cassures 5 entre certains étriers facilitent le découpage à toute longueur voulue. Des trous 6 sont également prévus au moulage pour le passage de vis de fixation. Toute coloration, correspondant au support (matériau du bâtiment ou du toit, etc.), pourra être apportée à la matière avant son moulage.

Bien entendu, la forme et les dimensions des divers éléments du système pourront s'écarter de celles données dans cet exemple. Ainsi les étriers 2 pourront avoir la forme de U, de V ou autres, dès lors que les pointes 4 seront orientées vers le haut et seront espacées d'une distance légèrement inférieure à la taille d'un pigeon moyen. De même toute matière plastique (souple) pourra être utilisée pour le moulage par exemple par injection.

## REFERENCES

1. Bande
2. Etriers
3. Base
4. Pointes
5. Amorces de cassures
6. Trous

**Revendications**

1. Dispositif pour empêcher les oiseaux, et notamment les pigeons, de se poser sur une surface telle qu'un toit, une corniche ou tout élément de bâtiment ou de monument, caractérisé en ce qu'il consiste en une bande (1) allongée en matière plastique semi-rigide (souple) portant à intervalles réguliers des étriers transversaux (2) dont les pointes (4) sont orientées vers le haut, la longueur de cet intervalle et les dimensions de ces étriers (2) étant dissuasifs vis à vis des dimensions des oiseaux à éloigner.

2. Disposition selon la revendication 1, caractérisé en ce que ladite bande (1) et lesdits étriers (2) sont venus ensemble de moulage.

3. Dispositif selon les revendications 1 et 2, caractérisé en ce que des amorces de prédécoupage (5) sont prévues sur la bande (1).

4. Dispositif selon les revendications 1 à 3, caractérisé en ce que la matière de moulage est colorée en fonction du support à protéger.

Fig_1

Fig_2

0300936

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-1 757 735 (H. NEUBER) <br> * En entier * <br> --- | 1-2 | A 01 M 29/00 |
| X | DE-A-3 501 333 (R. NAPIERSKI) <br> * Page 5, alinéas 1-5; figures 1,2 * <br> --- | 1-3 | |
| D,A | US-A-2 308 893 (P. PAVLOFF et al.) <br> --- | | |
| A | US-A-3 282 000 (J.B. SHAW) <br> --- | | |
| D,A | AU-B- 43 178 (K.M. LOWN)(1979) <br> ----- | | |

**DOMAINES TECHNIQUES RECHERCHES (Int. Cl.4)**

A 01 M
E 04 D

Le présent rapport a été établi pour toutes les revendications

| Lieu de la recherche | Date d'achèvement de la recherche | Examinateur |
|---|---|---|
| LA HAYE | 13-09-1988 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)